Europäisches Patentamt

European Patent Office

Office européen des brevets

(11) Publication number: **0 313 179**
**A2**

## EUROPEAN PATENT APPLICATION

(21) Application number: **88303742.6**

(22) Date of filing: **26.04.88**

(51) Int. Cl.⁴: **C08G 18/69**

(30) Priority: **19.10.87 US 109898**

(43) Date of publication of application:
**26.04.89 Bulletin 89/17**

(84) Designated Contracting States:
**BE DE ES FR GB IT LU NL**

(71) Applicant: **GENCORP INC.**
**175 Ghent Road**
**Akron Ohio 44313(US)**

(72) Inventor: **Bogdany, John**
**146 Park Drive**
**Fort Oglethorpe Georgia 30472(US)**

(74) Representative: **Calderbank, Thomas Roger et al**
**MEWBURN ELLIS & CO. 2/3 Cursitor Street**
**London EC4A 1BQ(GB)**

(54) **Aromatic polyisocyanate modified latex compositions having improved adhesion and drying rates.**

(57) A latex composition is modified by the addition of an aromatic or an alkyl substituted aromatic polyisocyanate compound which unexpectedly has been found to result in improved properties such as increased drying rate and improved adhesion. The latex compositions generally contain a mineral filler therein such as calcium carbonate, various clays, and the like, as well as a frothing agent such as soaps for producing an aerated system. A particular use is in forming a coating on a primary carpet substrate.

EP 0 313 179 A2

# AROMATIC POLYISOCYANATE MODIFIED LATEX COMPOSITIONS HAVING IMPROVED ADHESION AND DRYING RATES

The present invention relates to a latex composition having an aromatic polyisocyanate added thereto which results in reduced drying times and improved physical properties.

Heretofore, latex compositions, that is the suspension of a polymer in an aqueous medium, have been utilized to coat various substrates such as paper, woven and tufted carpet, upholstery, and the like. Inasmuch as water is utilized as a carrier but must be subsequently removed after application of the latex, it is desirable to quickly and efficiently remove the water as well as, if possible, obtain improved adhesion.

U. S. Patent No. 4,663,377 to Hombach, et al, relates to an aliphatic polyisocyanate composition which is dispersible in water when utilized with an emulsifier such as the reaction products of an aliphatic polyisocyanate with nonionic ethylene oxide unit-containing polyether alcohols. In effect, the emulsifiers are urethane products.

It is therefore disideratum of the present invention to provide latex compositions which have reduced drying times. For example, a drying time of approximately one half the normal drying time may be achieved when approximately 10 parts by weight of an aromatic polyisocyanate is utilized per 100 parts of weight of latex solids. The modification of the latex composition by the use of the aromatic polyisocyanate also results in increased strength even when increased amounts of filler are utilized. Thus, high amounts of fillers can be utilized and high strength adhesion still maintained which results were otherwise heretofore generally not possible. The amount of the aromatic polyisocyanate utilized is generally from about 1 to about 30 parts of weight per 100 parts by weight of latex solids. Diphenylmethane diisocyanate is a preferred aromatic polyisocyanate. Fillers such as inert minerals are generally utilized in large amounts as in excess of 100 parts of weight per 100 parts by weight of the latex solids along with frothing agents, e.g., soaps, which aid in the entrapment or entrainment of air.

The latex compositions of the present invention generally contain conventional latex polymer solids or polymers known to the art and to the literature. The polymers can be random, linear or branch, graph or block homopolymers or copolymers. Desirably they have an average molecular weight of at least 50,000 so that in dry form they are solid and flexible or resilient. The latex composition of the present invention is generally an aqueous dispersion, emulsion or lattices of the polymers or copolymers or mixtures thereof. A specific class or type of a latex polymer of the present invention is a copolymer made from a vinyl substituted aromatic monomer having from 8 to 12 carbon atoms such as styrene and a conjugated diene monomer having from 4 to 8 carbon atoms such as butadiene, e.g., a styrenebutadiene copolymer. Examples of other classes of latex polymers include the various vinyl esters of carboxylic acids having from 2 to 6 carbon atoms such as vinyl acetate and the like, and the various copolymers of said carboxylic acid esters with olefins having from 2 to 14 carbon atoms as for example an ethylene-vinyl acetate copolymer. Another class of latex polymers are the various arcylic ester polymers wherein the ester portion has from 1 to 10 carbon atoms, and various acrylic ester copolymers such as those made from the copolymerization of butyl acrylate, octyl acrylate, methyl methacrylate, and the like, with themselves or with acrylonitrile, acrylamide, acrylic acid, the various conjugated dienes having from 4 to 12 carbon atoms such as butadiene, and the like. Still another class of latex polymers are the various polymers made from conjugated dienes having from 4 to 12 carbon atoms such as polybutadiene, polyisoprene, and the like including natural rubber and polychloroprene. The various copolymers of acrylonitrile and a conjugated diene having from 4 to 12 carbon atoms constitute another class of suitable latex type polymers which can be utilized in the present invention with specific examples including an isoprene-acrylonitrile copolymer, a butadiene-acrylonitrile copolymer, a butadiene-styrene-acrylonitrile copolymer, and the like. Polyvinyl chloride, polyvinylidene chloride, vinyl chloride-vinylidene chloride copolymers, or mixtures thereof constitute yet another class of later polymers. Copolymers can be utilized which contain at least 50 percent of weight of at least one monomer of either vinyl chloride or vinylidene chloride with a monoethylenically unsaturated monomer other than said vinyl chloride or said vinylidene chloride monomers having from 2 to 14 carbon atoms. Naturally, mixtures of any of the above polymers or copolymers can also be utilized.

A preferred polymer of the present invention is a carboxylated conjugated diene copolymer of (a) from about 30 to about 60 parts by weight of at least one conjugated diene monomer having from 4 to 6 carbon atoms, (b) from about 40 to about 65 parts by weight of at least one copolymerizable vinyl substituted aromatic monomer having from 8 to 12 carbon atoms, and (c) from about 0.5 to about 10 parts by weight of at least one copolymerizable unsaturated monomer having from 1 to 2 COOH groups and a total of from 3 to 5 carbon atoms. Examples of (a) include isoprene, 2,3-dimethyl butadiene, with butadiene being preferred. Examples of (b) include alpha methyl styrene, para methyl styrene, methyl vinyl toluene, and the like, with styrene being preferred. Examples of (c) include acrylic, methacrylic, fumaric, maleic, itaconic and crotonic acids with acrylic, methacrylic, fumaric and itaconic acids, and mixtures thereof being preferred. Examples of the above polymers and copolymers as well as other latex polymers are set forth in U. S. Patent No. 4,634,730 which is hereby fully incorported by reference.

The lattices are made by free radical aqueous emulsion polymerization. Free radical aqueous emulsion polymerization and copolymerization of ethylenically unsaturated monomers is well known to those skilled in the art. In this connection reference is made to Whitby et al, "Synthetic Rubber," John Wiley & Sons, Inc., New York, 1954; Bovey et al, "Emulsion Polymerization," High Polymers, Vol. IX, Interscience Polymers, Inc., 1955; Schildknecht, "Vinyl and Related Polymers," John Wiley & Sons, Inc., New York, 1952; "Encyclopedia of Polymer Science and Technology," Vol. 3 (1965), Vol. 5 (1966), Vol. 7 (1967), Vol. 9 (1968) and Vol. 11 (1969), Interscience Publishers, a division of John Wiley & Sons, Inc., New York and U. S. Patent No. 4,146,495, all of which are hereby fully incorporated by reference. The technique of polymerizing or copolymerizing one or more monomers in the presence of a polymer or a substrate, "grafting technique," is known and is frequently called graft polymerization or graft copolymerization. In this connection, reference is made to "Proceedings of the Third Rubber Technology Congress," 1954, W. Heffer & Sons, Ltd., Cambridge, pages 185-195; Ham, "Copolymerization," High Polymers, Vol. XVIII, Interscience Publishers a division of John Wiley & Sons, New York 1964; Burlant and Hoffman, "Block and Graft Polymers," Reinhold Publishing Corporation, New York, 1960; Ceresa, "Block and Graft Copolymers," Butterworth & Co. (Publishers) Ltd., London, 1962; Ceresa, "Block and Graft Copolymerization," Vol. 1 (1973) and Vol. 2. (1976), John Wiley & Sons, Ltd., New York; and Battaerd and Tregear, "Graft Copolymers," Polymer Reviews, Vol. 16, Interscience Publishers, a division of John Wiley & Sons, New York, 1967, all of which are hereby fully incorporated by reference. The graft copolymer may contain all graft copolymer but also may be a mixture of homopolymers, copolymers as well as the graft itself, depending on the rate of polymerization of the monomers under the polymerization conditions and so forth.

The amount of latex solids, that is latex polymers or copolymers, is generally from about 20 percent by weight to about 70 percent by weight, desirably from 40 to 60 percent by weight, and preferably from about 50 percent to about 55 percent by weight based upon the weight of the latex solids and the water.

The latex adhesive compositions of the present invention generally contain large amounts of inert fillers as for example from about 5 parts to about 1,000 parts by weight, desirably from about 100 to about 800 parts by weight, and preferably from about 150 to about 650 parts by weight per 100 parts by weight of the latex solids. The fillers are generally mineral solids such as calcium carbonate, various clays, various aluminum compounds such as aluminum trihydrate, various silicas, various silicates, dolomite, talc, barytes, celesite, and the like.

The present invention preferably utilizes frothing or foaming agents which generally modify the surface tension of the latex so that air entrapment or entrainment can be achieved. That is, latexes of the present invention desirably contain air and thus are often in the form of a froth or foam and hence have a reduced tendency to flow when applied to a substrate. Air entrainment and reduced flow are desirable since they abate or reduce excess penetration of the latex composition into the substrate such as a carpet, a rug, fabrics or textiles such as upholstery, drapery, cloth lining, and the like. The entrainment of air also helps to control weight and thus prevent excessive amounts of the latex composition from being utilized. The frothing or foaming agent can be various synthetic detergents such as sodium lauryl sulfate, natural fatty acid soaps, and the like. Examples of soaps include the various alkali salts, e.g.,sodium, potassium, etc. or ammonium salts of natural occurring fats such as stearic acid, palmitic acid, oleic acid, lauric acid, and the like. Another frothing agent is disclosed in U. S. Patent No. 4,172,067 which comprises urea, a sodium salt of condensed naphthalene sulfonic acid, a blend of $C_8$ to $C_{18}$ fatty acids, ammonium or sodium lauryl sulfate and water. Other frothing agents are set forth in U. S. Patents 3,516,975; 3,549,589; 3,804,700; 3,849,156; 4,049,587; 4,096,303; 4,197,342; 4,239,821; 4,288,486, 4,323,474, and reissue patent 28,682, all of which are hereby fully incorporated by reference. Naturally, mixtures of various frothing agents can be utilized. The amount of the frothing or foaming agent is generally small as from about 0.25 to about 5 parts by weight and desirably from about 0.50 to about 2 parts by weight for every 100 parts by weight of the latex solids.

Inasmuch as the aromatic polyisocyanate tend to increase the viscosity of the latex composition of the present invention with time, it is desirably added to the composition shortly before application of the composition to the desired substrate. In order that suitable application of the latex composition can be made to a substrate, the viscosity of the polyisocyanate modified latex composition may be controlled through the use of viscosity agents or modifiers. The viscosity of the overall latex composition including the viscosity of the system immediately after the addition of the aromatic polyisocyanate thereto is generally from about 1,000 to about 35,000 centipoises, and preferably from about 5,000 to about 18,000 centipoises. The amount of viscosity modifier generally required to achieve such a viscosity is rather small and naturally varies with each latex preparation. It thus can vary from 0 to about 10, with from about 0.1 to about 1 parts by weight, based upon 100 parts by weight of the latex solids. Any conventional type of viscosity modifier as well as those known to the art and to the literature can be utilized. Examples of specific viscosity modifiers or agents include the various methyl celluloses, the various polyacrylates, natural proteins, starches, and the various natural gums such as gum arabic, karaya, and the like.

The aromatic polyisocyanate can be any isocyanate which reacts with the latex composition, thereby imparting improved properties thereto, especially upon drying or cure thereof. Generally, small amounts are effective in imparting improved properties and the properties are generally improved as increasing amounts of the aromatic polyisocyanate is utilized. Effective amounts of aromatic polyisocyanates are generally from about 1 to about 30 parts by weight and preferably from about 5 to about 15 parts by weight per 100 parts by weight of latex solids. The polyisocyanate desirably is a diisocyanate.

By the term "aromatic polyisocyanates," it is meant to also encompass or include alkyl substituted aromatic polyisocyanates. The aromatic polyisocyanates of the present invention have a total of from about 6 to about 25 carbon atoms thereon, with from about 12 to about 20 carbon atoms being preferred. Examples of suitable aromatic polyisocyanates include meta- or para-phenylene diisocyanate, the various diphenyl methane diisocyanate (MDI), the various bitolyene diisocyanates, the various dianisidine diisocyanates, the various isophorone diisocyanates, the various toluene diisocyanates, the various naphthylene diisocyanates such as 1,5-naphthylene diisocyanate, and 2,6-naphthylene diisocyanate, and the like. MDI, and especially the 4,4'-di-phenyl methane diisocyanate isomer thereof is preferred.

The latex compositions of the present invention can also contain various conventional additives known to the art as well as to the literature in suitable amounts as well as various antidegradants, fire and flame retardants, biocides, and the like.

The various compounds or components which form the latex composition of the present invention can generally be added and mixed in any order or sequence with the exception of the aromatic polyisocyanate which is preferably added last since it reacts with the other various components as well as increases the viscosity of the composition over a period of time. A desirable mixing procedure relates to adding the latex to a container or mixer, and adding the inert filler thereto and mixing for a sufficient amount of time to achieve a suitable blend. In a similar manner, the frothing agent is added and mixed in a conventional manner, as for example set forth in U. S. Patent No. 4,634,730 which is hereby fully incorporated by reference, to produce a froth or foam followed by the addition of the viscosity modifiers which are blended and mixed to produce a composition of a desired viscosity. The aromatic polyisocyanates are added last, mixed with the above composition, and then the overall composition, that is the aromatic polyisocyanate modified latex composition added to a suitable substrate. Owing to the fact that the polyisocyanate reacts with the various component, it is generally added immediately before application of the composition to a substrate, or the like. For example, when the composition of the present invention is added to a substrate as by spraying, the aromatic polyisocyanate can be added to a mixing head, briefly mixed with the various components and then the overall composition applied to the substrate. Application of the modified latex composition to a substrate such as a carpet or rug can be in an conventional manner as by brushing, dipping, coating, spraying, and the like, or as set forth in U. S. Patent 4,634,730 which is hereby fully incorporated by reference.

It has been unexpectedly found that the addition of the aromatic polyisocyanate to the latex components of the present invention results in improved properties such as improved adhesion, an increase drying rate, that is reduced drying time, and the like. Both the improved adhesion as well as the reduced drying time tend to vary with the amount of the aromatic polyisocyanate added.

The polyisocyanate modified latex composition of the present invention can generally be utilized wherever an adhesive latex is required or desired as for example on a substrate or for joining two different substrates together. The substrate can be a fabric or textile such as upholstery, drapery, cloth lining, and the like, and can be woven, knitted, nonwoven, or contain mixtures thereof. Preferably, the substrate is a rug or carpet with the latex composition of the present invention generally in the form of a froth applied to the backing thereof, although it can be applied to the face of fabrics and the like. The material of the fabric can be natural or synthetic fibers, or mixtures thereof, with specific examples including cotton, wool, jute, paper, cellulose, linen, silk, polyester, polyamide (nylon), rayon, acrylonitrile polymers, vinylidene chloride polymers, polypropylene, various acrylic, fiberglass, boron fibers, carbon fibers, and the like.

A highly preferred area of use is in the field of carpet backings. That is, the latex composition is applied to a carpet backing existing on a primary substrate with a secondary substrate subsequently applied over the aromatic polyisocyanate modified latex coating composition of the present invention. The coating is then heated whereupon the latex is cured. Improved adhesion with regard to the carpet piles, that is the tuft binds as well as reduced drying times, that is increased drying rates, are obtained.

The present invention will be better understood by reference to the following examples.

. Mixing Procedure

All ingredients were added in order of listing with approximately 15 minutes of mixing time being allowed between each ingredient addition. A "Lightnin" mixer was utilized having a 1/8 HP electric motor with a marine type down thrust propeller and speed controlled by variable transformer Type 9-521-115-2; speed varied from approximately 250 RPM at the start of the compound to approximately 12-15,000 RPM at the finish. After the various nonisocyanate ingredients were separately added and mixed, the polyisocyanate was added in the following manner. A known weight of the mixed latex components were added to Hobart (Kitchen Aid) mixer bowl and mixed using a wire cage mixer, speed setting of #8 (on the Hobart planetary mixer) and run until a proper air (ratio) was whipped into the compounds (cup weight). The time to achieve proper cup weight was noted. A known weight of Lupranate MDI manufacturer by BASF, was added to the (frothed) compound at slow speed of (setting #1). The mixer bowl was lowered and raised in succession during the mixing to ensure proper mixing. Mixing of the aromatic polyisocyanate compound occurred for approximately one minute.

The above polyisocyanate modified latex composition was added to a carpet backing in the following manner. The composition was applied with a knife coater to the back of a carpet moving thereunder. The carpet had yarns of either polypropylene or nylon and the amount of frothed latex composition added thereto was 20, 26, 32 or 36 ounces dry weight per square yard of carpet backing. The coating was then cured by heating in an air circulating electronically heated laboratory over at 275° F. A coating not containing any aromatic polyisocyanate was heated for approximately ten minutes whereas a coating containing an aromatic polyisocyanate of the present invention was heated for approximately five minutes. The cured backing was then tested for various physical properties.

The following formulations were utilized in the examples.

| Gen-Flo 7121 | DiversiTech General's carboxylated styrene butadiene latex copolymer. |
|---|---|
| Amical #2 | Calcium Carbonate - typical product supplied to the carpet industry by TAC Industries, Dalton, Georgia |
| GTR-FA | A proprietary froth aid sold by DiversiTech General |
| Paragum 178 | A polyacrylate polymer used for viscosity modification, manufactured by ParaChem Southern, Simsonville, S.C. |
| *Lupranate - M10 | Diphenylmethane diisocyanate<br><br>Visc. cps - 55<br>HyD - Chloride (PPM) - 270 |
| *Lupranate - M-20S | Diphenylmethane diisocyanate<br><br>Visc. cps - 193<br>HyD - Chlorine (PPM) - 390 |

*Made by BASF

The following five examples set forth the formulations utilized to prepare a polyisocyanate modified latex composition of the present invention along with preparation data and physical properties upon curing.

## EXAMPLE 1

| Ingredients | Dry Solids | | | | |
|---|---|---|---|---|---|
| Gen-Flo 7121 (53%) | 100.00 | | | | |
| Water | (to 82% T.S.C.) | | | | |
| Amical #2 | 400.00 | | | | |
| GTR-FA (25% Active) | 1.20 | | | | |
| Paragum 178 (13%) | .35 (to adjust to desired viscosity) | | | | |
| Initial Viscosity | 13,200 cps #5@20 Brookfield Viscometer | | | | |
| Froth Time (Seconds) | 100 | | | | |
| Froth Cup Weight (Grams per Quart) | 660 | | | | |
| Froth Viscosity | 25,500 cps #6@20 Brookfield Viscometer | | | | |
| Parts Lupranate M-10 | | 0 | 2.5 | 5.0 | 10.0 |
| Viscosity #6@20 cps | | 25,500 | 29,500 | 30,000 | 32,000 |
| Set Up Time (Room Temp) | | - | 60'00" | 24'00" | 9'00" |
| Dry Rate | | 5'58" | 5'12" | 4'23" | 3'12" |
| Adhesions (lbs/Inch) | | 2.45 | 2.67 | 3.10 | 3.09 |
| Tuft Binds (lbs) | | 11.9 | 13.07 | 13.4 | 14.47 |

## EXAMPLE 2

| Ingredients | Dry Solids | | | | |
|---|---|---|---|---|---|
| Gen-Flo 7121 | 100.00 | | | | |
| Water | (to 82% T.S.C.) | | | | |
| Amical #2 | 450.00 | | | | |
| GTR-FA (25% Active) | 1.30 | | | | |
| Paragum 178 (13%) | .43 | | | | |
| Initial Viscosity | 13,200 cps #5@20 Brookfield Viscometer | | | | |
| Froth Time (Seconds) | 95 | | | | |
| Froth Cup Weight (Grams per Quart) | 710 | | | | |
| Froth Viscosity | 26,500 cps #6@20 Brookfield Viscometer | | | | |
| Parts Lupranate M-10 | | 0 | 2.5 | 5.0 | 10.0 |
| Viscosity #6@20 cps | | 26,500 | 26,500 | 27,000 | 32,500 |
| Set Up Time (Room Temp) | | - | 70'05" | 35'00" | 11'30" |
| Dry Rate | | 5'43" | 4'59" | 4'10" | 3'12" |
| Adhesions (lbs/Inch) | | 2.26 | 2.49 | 3.06 | 3.08 |
| Tuft Binds (lbs) | | 13.33 | 13.07 | 13.87 | 15.00 |

## EXAMPLE 3

| Ingredients | Dry Solids | | | | |
|---|---|---|---|---|---|
| Gen-Flo 7121 (53%) | 100.00 | | | | |
| Water | (to 82% T.S.C.) | | | | |
| Amical #2 | 475.00 | | | | |
| GTR-FA (25% Active) | 1.40 | | | | |
| Paragum 178 (13%) | .47 | | | | |
| Initial Viscosity | 12,900 cps #5@20 Brookfield Viscometer | | | | |
| Froth Time (Seconds) | 100 | | | | |
| Froth Cup Weight (Grams per Quart) | 666 | | | | |
| Froth Viscosity | 23,750 cps #6@20 Brookfield Viscometer | | | | |
| Parts Lupranate M-10 | | 0 | 2.5 | 5.0 | 10.0 |
| Viscosity #6@20 cps | | 23,750 | 26,000 | 27,500 | 28,500 |
| Set Up Time (Room Temp) | | - | 95'00" | 60'00" | 18'00" |
| Dry Rate | | 5'33" | 4'40" | 4'00" | 2'45" |
| Adhesions (lbs/Inch) | | 2.02 | 2.24 | 2.74 | 2.91 |
| Tuft Binds (lbs) | | 12.33 | 12.07 | 13.87 | 16.53 |

## EXAMPLE 4

| Ingredients | Dry Solids | | | | |
|---|---|---|---|---|---|
| Gen-Flo 7121 (53%) | 100.00 | | | | |
| Water | (to 82% T.S.C.) | | | | |
| Amical #2 | 500.00 | | | | |
| GTR-FA (25% Active) | 1.50 | | | | |
| Paragum 178 (13%) | .51 | | | | |
| Initial Viscosity | 13,900 cps #5@20 Brookfield Viscometer | | | | |
| Froth Time (Seconds) | 100 | | | | |
| Froth Cup Weight (Grams per Quart) | 705 | | | | |
| Froth Viscosity | 24,000 cps #6@20 Brookfield Viscometer | | | | |
| Parts Lupranate M-10 | | 0 | 2.5 | 5.0 | 10.0 |
| Viscosity #6@20 cps | | 24,000 | 25,500 | 28,000 | 32,000 |
| Set Up Time (Room Temp) | | - | 100'00" | 75'00" | 25'00" |
| Dry Rate | | 5'19" | 4'44" | 3'51" | 2'43" |
| Adhesions (lbs/Inch) | | 1.96 | 2.00 | 2.15 | 2.80 |
| Tuft Binds (lbs) | | 12.47 | 12.20 | 13.2 | 13.33 |

EXAMPLE 5

| Ingredients | Dry Solids | | | |
|---|---|---|---|---|
| Gen-Flo 7121 (53%) | 100.00 | | | |
| Water | (to 82% T.S.C.) | | | |
| Amical #2 | 550.00 | | | |
| GTR-FA (25% Active) | 1.60 | | | |
| Paragum 178 | .50 | | | |
| Initial Viscosity | 13,600 cps #5@20 Brookfield Viscometer | | | |
| Froth Time (Seconds) | 100 | | | |
| Froth Cup Weight (Grams per Quart) | 682 | | | |
| Froth Viscosity | 23,750 cps #6@20 Brookfield Viscometer | | | |
| Parts Lupranate M-10 | 0 | 2.5 | 5.0 | 10.0 |
| Viscosity #6@20 cps | 23,750 | 25,000 | 26,750 | 28,000 |
| Set Up Time (Room Temp) | - | 125'00" | 90'00" | 40'00" |
| Dry Rate | 5'00" | 4'42" | 3'38" | 2'40" |
| Adhesions (lbs/Inch) | 1.50 | 1.64 | 1.79 | 2.59 |
| Tuft Binds (lbs) | 12.53 | 13.60 | 14.27 | 14.40 |

The above examples were generally cured in an oven at approximately 275° F for about 10 minutes.

As apparent from the above data, the adhesion in pounds per inch tended to increase as additional amounts of the aromatic diisocyanate were utilised. Moreover, the tuft strength, that is the pounds required to remove the tufting from the primary carpet substrate also increased with the additional amount of the polyisocyanate utilized. Moreover, as additional amounts of filler were utilized, the adhesion strength was slightly reduced. A specific or desired adhesion strength level can be maintained by adding a suitable amount of an aromatic polyisocyanate to the various latex components and achieve an overall formulation having a high amount of filler therein. It is also apparent from the examples that a considerable reduction in drying time of the latex composition was obtained by increasing the amount of aromatic polyisocyanate utilized. In fact, as a general statement, utilization of approximately 10 parts by weight of the aromatic polyisocyanate per 100 parts by weight of latex solids resulted in reducing the drying time to approximately one half.

While in accordance with the patent statutes, the best mode and preferred embodiment has been set forth, the scope of the invention is not limited thereto, but rather by the scope of the attached claims.

**Claims**

1. A polyisocyanate modified latex composition having an improved drying rate, comprising:
a blend of a latex solid in an aqueous medium, a filler, the amount of said filler being from about 5 to about 1,000 parts by weight per 100 parts by weight of said latex solid, and
an effective amount of an aromatic polyisocyanate so that said blend has an improved drying rate.

2. A composition according to Claim 1, wherein said polyisocyanate is an aromatic or an alkyl substituted aromatic polyisocyanate having a total of from 6 to about 25 carbon atoms, and wherein the amount of said polyisocyanate is from about 1 part of about 30 parts by weight per 100 parts by weight of said latex solid.

3. A composition according to Claim 2, wherein said filler is an inert mineral filler, wherein the amount of said filler is from about 150 parts of about 650 parts by weight per 100 parts of weight of said latex solid, wherein the amount of said aromatic polyisocyanate is from about 5 parts to about 15 parts by weight per 100 parts by weight of said latex solid, wherein the total number of carbon atoms in said aromatic polyisocyanate is from about 12 to about 20, and wherein the NCO content of said aromatic polyisocyanate is at least 30 percent by weight based upon the total weight of said aromatic polyisocyanate.

4. A composition according to any one of the preceding claims wherein said latex is a carboxylated styrene butadiene copolymer, where said filler is calcium carbonate, and wherein said aromatic polyisocyanate is diphenylmethane diisocyanate.

5. A composition according to any one of the preceding claims, including a frothing agent, the amount of said frothing agent being from about 0.25 parts by weight to about 5.0 parts by weight based upon 100 parts by weight of said latex solid.

6. A composition according to claim 5, wherein said frothing agent is a soap.

7. A carpet having a backing, said carpet backing having a latex coating thereon comprising the composition of any one of the preceding claims.

8. A dry polyisocyanate modified latex composition having improved adhesion, comprising: a latex solid, a filler, the amount of said filler being from about 5 parts by weight by about 1,000 parts by weight per 100 parts by weight of said latex solid; and an effective amount of an aromatic polyisocyanate so that the dry latex composition has improved adhesion.

9. The composition of Claim 8, wherein said polyisocyanate is an aromatic or an alkyl substituted aromatic polyisocyanate having a total of from 6 to 25 carbon atoms, and wherein the amount of said polyisocyanate is from about 1 to about 30 parts by weight per 100 parts by weight of said latex solid.

10. A composition of Claim 9, wherein the amount of said filler is from about 100 parts by weight to about 800 parts by weight per 100 parts by weight of said latex solid, and wherein said aromatic or alkyl substituted aromatic polyisocyanate has a total of from about 12 to about 20 carbon atoms.

12. The composition of claim 9 or claim 10 wherein said filler is a mineral filler, wherein the amount of said mineral filler is from about 150 parts by weight to about 650 parts by weight per 100 parts by weight of said latex solid, and wherein the amount of said aromatic or alkyl substituted aromatic polyisocyanate is from about 5 parts by weight to about 15 parts by weight per 100 parts by weight of said latex solid.

12. The composition of any one of claims 9 - 11 wherein said aromatic or said alkyl substituted aromatic polyisocyanate include meta- or para-phenylene diisocyanate the various diphenyl methane diisocyanate (MDI), the various bitolyene diisocyanates, the various dianisidine diisocyanates, the various isophorone diisocyanates, the various toluene diisocyanates, and the various naphthylene diisocyanates.

13. The composition of Claim 12, wherein said polyisocyanate is diphenylmethane diisocyanate.

14. The composition of any one of claims 9 - 13, including a frothing agent, the amount of said frothing agent being from about 0.25 parts by weight to about 5.0 parts by weight based upon 100 parts by weight of said latex solid, and wherein said frothing agent is a soap.

15. A carpet having a backing, said carpet backing containing a coating adhered thereto comprising the composition of any one of claims 8 to 14.

16. A process for applying a polyisocyanate modified latex composition to a substrate comprising the steps of:
preparing a latex composition;
adding and mixing an aromatic polyisocyanate thereto to form the modified latex composition;
applying said aromatic polyisocyanate modified latex composition to a substrate; and
drying said polyisocyanate modified latex composition to form a coating having improved adhesion on said substrate.